# EUROPÄISCHE PATENTANMELDUNG

(11) **EP 0 942 573 A2**
(43) Veröffentlichungstag der Anmeldung: **15.09.1999**
(21) Anmeldenummer: 99440034.9
(22) Anmeldetag: 19.02.1999
(51) Int. Cl.: H04M 3/22, H04M 7/00

(54) **IN-Dienst zur zentralen Netzbetreiberzuordnung von Störungsmeldungen in einem Multi-Operator-Umfeld**

(30) Priorität: 12.03.1998 DE 19810626
(71) Anmelder: ALCATEL, 75008 Paris (FR)
(72) Erfinder: Lautenschlager, Wolfgang, 71287 Weissach-Flacht (DE); Stürz, Heinz, Dr., 01187 Dresden (DE)
(74) Vertreter: Zinsinger, Norbert

(57) **Zusammenfassung**

Bei einem Verfahren zur zentralen Bearbeitung von Störungsmeldungen in einem Telekommunikations(=TK)-Netz mit mehreren Teilnetzen (1, 2) unterschiedlicher Netzbetreiber (A, B) ist mindestens ein IN(=Intelligent Network)-Dienst (8) eingerichtet, der durch Anwahl einer Störungsrufnummer von jedem beliebigen Netzanschluß (3, 4) aus aktiviert werden kann, der bei Eingang einer Störungsmeldung unabhängig von dem die Störungsmeldung absetzenden Anschluß (4) feststellt, auf welche Anschlußrufnummer sich die Störungsmeldung bezieht, der den Netzbetreiber (A), zu dessen Teilnetz (1) der entsprechende gestörte Anschluß (3) gehört, aus der festgestellten Anschlußrufnummer ermittelt und der dem zuständigen Netzbetreiber (A) den Störungsruf zustellt. Damit wird eine einfache Zuordnung von Anrufen mit Störungsmeldungen in einem Multi-Operator-Umfeld zum jeweils zuständigen Netzbetreiber ermöglicht, wobei die Zugehörigkeit eines TK-Teilnehmers zu einem bestimmten Netzbetreiber anhand seiner Rufnummer nicht erkennbar ist und die Störung auch von einem anderen als dem betroffenen gestörten Anschluß aus gemeldet werden kann.

## Beschreibung

Die Erfindung betrifft ein Verfahren zur Zuordnung von Störungsmeldungen an den betroffenen Netzbetreiber in einem Telekommunikations(=TK)-Netz mit mehreren, von unterschiedlichen Netzbetreibern betriebenen Teilnetzen in einer Multi-Operator-Umgebung.

In Ländern mit Fernmeldemonopol wird derzeit eine einheitliche Rufnummer mit nachfolgender Benutzerführung und Zuordnung zur betroffenen Dienststelle des Monopolisten angeboten. Beispielsweise gibt es heute in Deutschland eine Störungsannahmestelle für Störungen im Netz der Deutschen Telekom (DT AG). Diese Annahmestelle gibt Störungsmeldungen an die entsprechenden Dienststellen weiter, die die weitere Eingrenzung, Ermittlung und Beseitigung der Störungen veranlassen und durchführen. Alle Dienststellen liegen aber innerhalb eines Unternehmens, im genannten Beispiel innerhalb der DT AG.

Die Liberalisierung des Telekommunikationsmarktes führt nun dazu, daß in einem TK-Netz in Zukunft mehrere Netzbetreiber konkurrieren werden. Außerdem wird die Zugehörigkeit eines TK-Teilnehmers zu einem bestimmten Netzbetreiber im zukünftigen "deutschen Festnetz", das aus mehreren Netzbetreibern bestehen wird, anhand der Rufnummer allein nicht mehr erkennbar sein. Selbst wenn den Netzbetreibern Rufnummerblöcke zugeordnet werden sollten, kann ein bestimmter Teilnehmer immer noch ein portierter Teilnehmer sein.

In einem Störungsfall ist es sehr leicht möglich, daß ein TK-Teilnehmer eine Störung für seinen Anschluß von einem fremden Anschluß aus melden will oder muß. Außerdem ist es möglich, daß ein TK-Teilnehmer die Störung für einen fremden Anschluß melden will, der auch noch räumlich weit von ihm entfernt liegen kann. Bei einem fremden Anschluß steigt aber die Wahrscheinlichkeit, daß er im Bereich eines anderen Netzbetreibers ist; der die Störung meldende TK-Teilnehmer hätte dann die jeweilige Rufnummer für die Teilnetz-spezifische Störungsannahme in der Regel nicht parat.

Außerdem ist der "fremde Netzbetreiber" auch nicht an einer kostenlosen Bearbeitung einer Störungsmeldung für einen anderen Netzbetreiber interessiert und in den wenigsten Fällen dazu in der Lage.

Aufgabe der vorliegenden Erfindung ist es daher, eine einfache Zuordnung von Anrufen mit Störungsmeldungen in einem Multi-Operator-Umfeld zum jeweils zuständigen Netzbetreiber zu ermöglichen, wobei die Zugehörigkeit eines TK-Teilnehmers zu einem bestimmten Netzbetreiber anhand seiner Rufnummer nicht erkennbar ist und die Störung auch von einem anderen als dem betroffenen gestörten Anschluß aus gemeldet werden kann.

Erfindungsgemäß wird diese Aufgabe dadurch gelöst, daß bei einem Verfahren mit den eingangs genannten Merkmalen mindestens ein IN(=Intelligent Network)-Dienst eingerichtet ist, der durch Anwahl einer Störungsrufnummer von jedem beliebigen Netzanschluß aus aktiviert werden kann, der bei Eingang einer Störungsmeldung unabhängig von dem die Störungsmeldung absetzenden Anschluß feststellt, auf welche Anschlußrufnummer sich die Störungsmeldung bezieht, der den Netzbetreiber, zu dessen Teilnetz der entsprechende gestörte Anschluß gehört, aus der festgestellten Anschlußrufnummer ermittelt und der dem zuständigen Netzbetreiber den Störungsruf zustellt.

Dadurch kann jeder Netzbetreiber seine eigene Störungsannahmeinstanz für sein Teilnetz aufbauen, die vom gesamten TK-Netz aus ohne Probleme erreichbar ist.

Besonders bevorzugt ist eine Variante des erfindungsgemäßen Verfahrens, bei der im TK-Netz ein zentraler IN-Dienst zur zentralen Zuordnung von eingehenden Störungsmeldungen zu dem jeweils zuständigen Betreiber des Teilnetzes, dem der gestörte Anschluß angehört, eingerichtet ist. So entfällt für jeden Teilnetzbetreiber die Notwendigkeit, einen entsprechenden IN-Dienst in seinem jeweiligen Teilnetz selbst vorzuhalten.

Aus der DE 43 21 458 A1 ist zwar ein Verfahren zur Unterstützung des Netzwerkmanagements für mehrere autonome Kommunikationsnetze bekannt, wobei die Netzbetreiber über eine zentrale Stelle Zustandsinformationen z.B. über auftretende Fehler in Netzkomponenten abrufen können. Die zentrale Netzwerkmanagementeinrichtung kann jedoch nur von den Betreibern selbst, nicht aber von den am TK-Netz angeschlossenen Teilnehmern beispielsweise mit einer Störungsmeldung zentral erreicht werden.

In der DE 195 35 540 C1 ist ein Verfahren zur Behandlung von an einem Kommunikationssystem mit automatischer Anrufverteilung ankommenden Anrufen beschrieben, die auf freie Agenten-Kommunikationsendgeräte unterschiedlicher Gruppen von Diensteanbietern zu vermitteln sind. Dabei wird allerdings nicht auf die Probleme eines aus mehreren Teilnetzen mit unterschiedlichen Netzbetreibern bestehenden TK-Netzes eingegangen, insbesondere nicht auf eine zentrale Zuordnung von Störungsmeldungen in einem Multi-Operator-Umfeld, wie es das erfindungsgemäße Verfahren ermöglicht.

Besonders vorteilhaft ist eine Variante des erfindungsgemäßen Verfahrens, bei der der IN-Dienst über eine für alle Netzbetreiber einheitliche, Teilnetz-unabhängige Störungsrufnummer aktiviert werden kann. Dadurch kann ähnlich wie bei der in Deutschland verwendeten einheitlichen Notrufnummer "110" eine zentrale, leicht merkbare und für das gesamte Gebiet des TK-Netzes und alle daran angeschlossenen Benutzer identische Störungsrufnummer angeboten werden, die jeder TK-Teilnehmer parat haben kann, ohne zusätzlich Auskunftsdienste oder Telefonbücher in Anspruch nehmen zu müssen.

Modifiziert werden kann diese Verfahrensvariante dadurch, daß die einheitliche Störungsrufnummer durch eine spezielle Kennziffer oder Zifferngruppe nach bestimmten Benutzergruppen, beispielsweise Geschäftskunden oder Privatkunden, differenziert ist. Dadurch können über das gesamte Gebiet des TK-Netzes angeschlossene Teilnehmer, die einer bestimmten Gruppe zugehören, jeweils mit der gleichen Störungsrufnummer aufgetretene Störungen melden.

Möglich ist auch eine Weiterbildung, bei der die einheitliche Störungsrufnummer durch eine spezielle Kennziffer oder Zifferngruppe nach bestimmten Modalitäten, beispielsweise Tag- oder Nachtabfrage, differenziert ist. Damit kann auf Besonderheiten von einzelnen Fallgruppen eingegangen werden, beispielsweise durch Bereitstellung unterschiedlicher Teilbereiche des IN-Dienstes, wodurch eine individuelle und damit möglicherweise schnellere Fallbehandlung und im Endeffekt eine rasche Beseitigung der jeweiligen Störung ermöglicht wird.

Besonders bevorzugt ist auch eine Variante des erfindungsgemäßen Verfahrens, bei der der IN-Dienst bei seiner Aktivierung eine automatische Ansage initiiert, die dem die Störungsmeldung absetzenden TK-Teilnehmer eingespielt wird und ihn zur Identifikation der Rufnummer des gestörten Anschlusses auffordert. Aus der DE 195 32 490 A1 ist ein Verfahren zur Bereitstellung von Ansagen für Dienste in einem Kommunikationsnetz an sich bekannt, bei dem alle einem Dienst zugeordneten Ansagen bei der zugehörigen Dienstelogik abgespeichert sind und bei der Aktivierung des Dienstes in das entsprechende Dienstunterstützungssystem geladen werden. Wird eine Ansage von einem Dienst benötigt, dann wird sie mittels einer speziellen Nachricht vom Dienststeuerpunkt aus aktiviert. Dadurch können Ansagen und Texte zusammen mit der Dienstelogik vom Diensteanbieter zentral verwaltet werden.

Besonders bequem für den anrufenden TK-Teilnehmer ist eine Weiterbildung dieser Verfahrensvariante, bei der zusammen mit der automatischen Ansage eine computergestützte Spracherkennungseinrichtung aktiviert wird, die aus den Antworten des meldenden TK-Teilnehmers die Rufnummer des gestörten Anschlusses ermittelt.

Alternativ dazu kann aber auch der meldende TK-Teilnehmer von der Ansage aufgefordert werden, die Rufnummer des gestörten Anschlusses über die Tastatur seines TK-Endgerätes einzugeben, was ebenfalls eine automatische Aufnahme der Rufnummer des gestörten Anschlusses durch den IN-Dienst ermöglicht.

Vorteilhaft ist es auch, wenn der meldende TK-Teilnehmer durch Spracheingabe oder durch definierte Betätigung der Tastatur seines TK-Endgeräts dem IN-Dienst mitteilen kann, ob sich die Störungsmeldung auf den aktuell zur Absetzung der Störungsmeldung benutzten oder einen anderen TK-Anschluß bezieht. Falls die Störung nämlich den aktuell benutzten TK-Anschluß betrifft, ist seitens des meldenden TK-Teilnehmers nicht die explizite Eingabe der vollständigen Rufnummer erforderlich, da diese aufgrund des vorliegenden Verbindungsaufbaus dem IN-Dienst ohnehin bekannt ist.

Vorzugsweise wird der IN-Dienst aus der festgestellten Anschlußrufnummer des gestörten Anschlusses mittels Datenbankabfrage den für diesen Anschluß zuständigen Netzbetreiber ermitteln.

Um eine weitere Bearbeitung der Störungsmeldung vom betroffenen Netzbetreiber zu ermöglichen, wird der IN-Dienst den Störungsruf an eine Störungsannahmestelle des zuständigen Netzbetreibers zustellen. Denkbar wäre auch die Weiterleitung des Störungsrufs an eine andere Stelle im Bereich des zuständigen Netzbetreibers, die ihrerseits den Ruf dann je nach Bedarf und Ausgestaltung des einzelnen Netzbetreibers intern weiterverarbeitet.

Bei einer vorteilhaften Weiterbildung ist vorgesehen, daß der IN-Dienst die vom meldenden TK-Teilnehmer angewählte Störungsrufnummer in die Rufnummer der Störungsannahmestelle des zuständigen Netzbetreibers übersetzt, indem er sie nach der Methode der Number Portability (=NP) entsprechend ergänzt.

Alternativ kann der IN-Dienst die vom meldenden TK-Teilnehmer angewählte Störungsrufnummer in die Rufnummer der Störungsannahmestelle des zuständigen Netzbetreibers übersetzen, indem er sie nach der Methode für die Verbindungsnetzbetreiberauswahl entsprechend ergänzt.

In beiden Fällen können zur Rufweiterleitung die in und zwischen den Teilnetzen verfügbaren Mechanismen verwendet werden.

Besonders bevorzugt ist eine Variante des erfindungsgemäßen Verfahrens, bei der der IN-Dienst für die Störungsmeldung eine Identifikationsnummer vergibt, die er einerseits abspeichert, andererseits dem meldenden TK-Teilnehmer mitteilt, damit dieser anschließend den aktuellen Stand der Bearbeitung der Störungsmeldung erfragen kann.

Vorteilhaft ist es dabei, wenn die Identifikationsnummer die Rufnummer des gestörten Anschlusses enthält, damit beim Rückruf automatisch die richtige Stelle angefordert wird.

Bei einer weiteren vorteilhaften Weiterbildung wählt der meldende TK-Teilnehmer bei Rückfragen über den aktuellen Stand der Bearbeitung der Störungsmeldung zunächst die Störungsrufnummer und daran anschließend die Identifikationsnummer an und bekommt daraufhin die gewünschten Informationen eingespielt.

Eine weitere vorteilhafte Verfahrensvariante zeichnet sich dadurch aus, daß eine Datenbank vorgesehen ist, die Informationen von allen Netzbetreibern über den aktuellen Stand der Bearbeitung von eingegangenen Störungsmeldungen erhält, und daß dem meldenden TK-Teilnehmer bei Anwahl der Identifikationsnummer die gewünschte Information über die von ihm gemeldete Störung aus der Datenbank übermittelt wird. Auf diese Weise kann die entsprechende Information automatisch und ohne Personalaufwand an den nachfragenden TK-Teilnehmer weitergereicht werden.

Besonders bevorzugt ist auch eine Variante, bei der der IN-Dienst aus einer Anzahl von bereitstehenden automatischen Ansagen die für den augenblicklichen Stand einer bestimmten Störungsbearbeitung zutreffende bei Anwahl der entsprechenden Identifikationsnummer auswählt und dem anrufenden TK-Teilnehmer einspielt.

Vorteilhafterweise kann auch der Betrieb und die Verwaltung des zentralen IN-Dienstes durch einen Diensteanbieter im TK-Netz erfolgen. Damit kann die Funktion der zentralen Störungsannahme und Zuordnung und Weiterleitung zu dem jeweils betroffenen Netzbetreiber gegen Entgelt von einem Dritten als Dienstleister übernommen werden, so daß insbesondere keine Kompetenzstreitigkeiten zwischen den einzelnen Netzbetreibern entstehen.

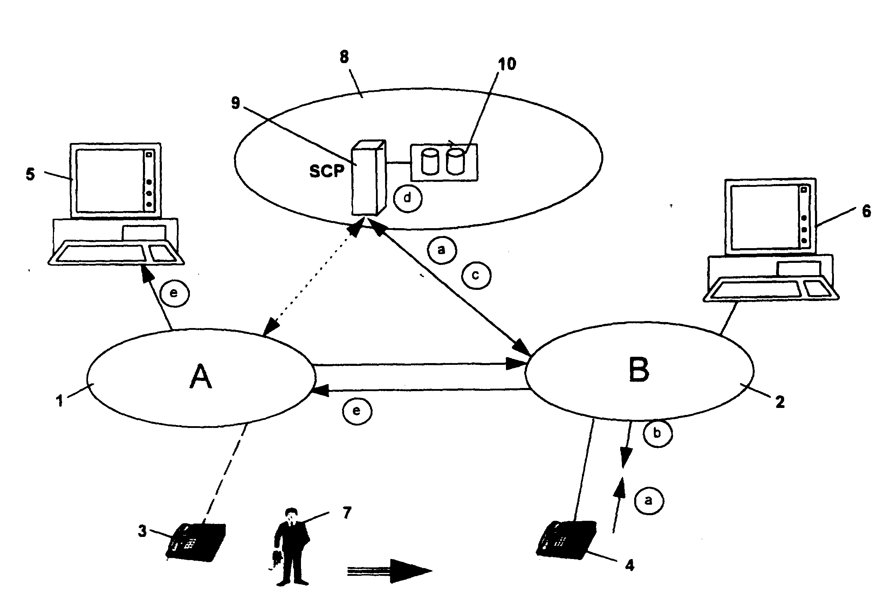

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert.

Die Figur zeigt ein schematisches Organisationsdiagramm zur Verwirklichung des erfindungsgemäßen Verfahrens.

Die Figur stellt folgende Situation dar:

Ein TK-Netz umfaßt mindestens zwei Teilnetze 1 bzw. 2, die von unterschiedlichen Netzbetreibern A bzw. B betrieben werden. Ein Anschluß 3 zu Teilnetz 1 ist gestört. Ein TK-Teilnehmer 7 will diese Störung melden und setzt die Störungsmeldung über einen Anschluß 4 am Teilnetz 2 ab. Der gestörte Anschluß 3 und der Anschluß 4, über den die Störung gemeldet wird, können räumlich weit voneinander entfernt sein.

Die Störungsmeldung a läuft nun zunächst über das Teilnetz 2 des Netzbetreibers B, dessen Störungsannahmestelle 6 jedoch für die Störung des Anschlusses 3 nicht zuständig wäre. Deshalb wird die Störungsmeldung a weitergereicht an einen zentralen, mit allen Teilnetzen 1, 2 kommunizierenden IN-Dienst 8, der einen Dienststeuerungspunkt (=SCP) 9 sowie eine daran angeschlossene Datenbank 10 mit Daten von sämtlichen Teilnetzen 1, 2 enthält.

Vom IN-Dienst 8 wird zunächst über eine Anfrage c beim meldenden TK-Teilnehmer 7 am Anschluß 4 abgefragt, ob sich die Störungsmeldung a auf den aktuell benutzten Anschluß 4 oder einen anderen Anschluß bezieht. Da im vorliegenden Fall nicht der aktuell benutzte Anschluß 4 sondern der Anschluß 3 gestört ist, wird im IN-Dienst 8 über eine Datenbankabfrage d der für den gestörten Anschluß 3 zuständige Netzbetreiber A des Teilnetzes 1 ermittelt. Aufgrund dieser Zuordnung bewirkt der IN-Dienst 8 nun eine Weiterleitung e der Störungsmeldung a vom Teilnetz 2 des Netzbetreibers B an das Teilnetz 1 des zuständigen Netzbetreibers A, der seinerseits eine Rufweiterleitung an die für sein Teilnetz 1 eingerichtete Störungsannahmestelle 5 veranlaßt, die dann die Störungsmeldung weiter bearbeitet und die Behebung der Störung veranlassen wird.

Die Ausgestaltung des IN-Dienstes 8 für die Zuordnung einer Störungsmeldung a an den zuständigen Netzbetreiber A ist also derart realisiert, daß der für die gemeldete Störung zuständige Netzbetreiber A unabhängig von der Netzzuständigkeit des rufenden Anschlusses 4 bestimmt werden kann.

Im einzelnen kann der Ablauf wie folgt gestaltet sein:
a. Der TK-Teilnehmer 7 wählt die einheitliche Rufnummer (derzeit gültig und künftig in Deutschland vorgesehen: 0117S; für S sieht die DTAG derzeit vor: 0 für Nachtabfrage, 1 für Privatkunden, 2 für Geschäftskunden,...) für die Störungsannahme aller Betreiber; diese Rufnummer führt dazu, daß der zentrale IN-Dienst 8 "Störungsannahme" aktiviert wird.
b. Durch den IN-Dienst 8 initiiert wird eine Ansage eingespielt, die zur Identifikation der gestörten Rufnummer auffordert, z.B.: "Bitte geben sie die ONKZ + Rufnummer des gestörten Anschlusses ein" oder "wollen Sie eine Störung für den Anschluß, von dem Sie anrufen, melden, wenn nein geben Sie eine 1 ein,...".
c. Der TK-Teilnehmer 7 wählt (z.B. mit Mehrfrequenzwahlverfahren) "Ortsnetzkennzahl + Rufnummer" oder "1".
d. Mittels einer Datenbankabfrage wird der Netzbetreiber A des gestörten Anschlusses 3 ermittelt.
e. Der Ruf wird der Störungsannahmestelle 5 des betroffenen Netzbetreibers A zugestellt. Dort kann der Ruf entgegengenommen werden und der weiteren Bearbeitung zugeführt werden.

Der Ruf kann folgendermaßen zugestellt werden:
Der TK-Teilnehmer 7 wählt eine einheitliche Rufnummer für die Störungsannahme; die vom Teilnehmer gewählte Rufnummer der Störungsannahme kann in die Rufnummer für die netzbetreiberspezifischen Störungsannahmestelle 5 wie folgt übersetzt werden:
1. Die Nummer wird entsprechend der Number Portability (NP) Methode ergänzt; es werden die in und zwischen den Netzen verfügbaren Mechanismen zur Realisierung der NP verwendet.
2. Die Nummer wird entsprechend der Methode für die Verbindungsnetzbetreiberauswahl ergänzt; es werden die in und zwischen den Netzen verfügbaren Mechanismen verwendet.
3. Es können auch andere als die in und zwischen den Netzen verfügbaren Mechanismen verwendet werden.

Damit der TK-Teilnehmer 7 anschließend den aktuellen Stand der Störungsmeldung erfragen kann, wird ihm bei der Meldung der Störung eine Identifikationsnummer gegeben.

Mit Hilfe dieser Identifikationsnummer ist eine Nachfrage wie folgt möglich:
f. Der TK-Teilnehmer 7 wählt die einheitliche Rufnummer für die zentrale Störungsannahme aller Betreiber A, B.
g. Danach wählt er die Identifikationsnummer. Die Datenbank 10 hat Kenntnis über den augenblicklichen Stand der Arbeiten zur Beseitigung der Störung. Ansagen in den Netzen aller Betreiber erlauben die Information der Teilnehmer über den Stand der Arbeiten.
h. Die Datenbank 10 gibt dem Teilnetz 1 des Betreibers A eine Nummer zur Identifikation einer Ansage, die zur Information des Teilnehmers 7 angelegt werden soll.
i. Will der Teilnehmer 7 wieder zur Störungsannahmestelle 5 weiterverbunden werden, wählt er eine besondere Kennung nach.

## Patentansprüche

1. Verfahren zur Bearbeitung von Störungsmeldungen in einem Telekommunikations(=TK)-Netz mit mehreren Teilnetzen (1, 2) unterschiedlicher Netzbetreiber (A, B), wobei mindestens ein IN(=Intelligent Network)-Dienst (8) eingerichtet ist, der durch Anwahl einer Störungsrufnummer von jedem beliebigen Netzanschluß (3, 4) aus aktiviert werden kann, der bei Eingang einer Störungsmeldung unabhängig von dem die Störungsmeldung absetzenden Anschluß (4) feststellt, auf welche Anschlußrufnummer sich die Störungsmeldung bezieht, der den Netzbetreiber (A), zu dessen Teilnetz (1) der entsprechende gestörte Anschluß (3) gehört, aus der festgestellten Anschlußrufnummer ermittelt und der dem zuständigen Netzbetreiber (A) den Störungsruf zustellt.

2. Verfahren nach Anspruch 1, dadurch gekennzeichnet, daß ein zentraler IN-Dienst (8) zur zentralen Zuordnung von Störungsmeldungen im TK-Netz eingerichtet ist.

3. Verfahren nach Anspruch 1 oder 2, dadurch gekennzeichnet, daß der IN-Dienst (8) über eine für alle Netzbetreiber (A, B) einheitliche, Teilnetz-unabhängige Störungsrufnummer aktiviert werden kann.

4. Verfahren nach Anspruch 3, dadurch gekennzeichnet, daß die einheitliche Störungsrufnummer durch eine spezielle Kennziffer oder Zifferngruppe nach bestimmten Benutzergruppen, beispielsweise Geschäftskunden oder Privatkunden, differenziert ist.

5. Verfahren nach Anspruch 3 oder 4, dadurch gekennzeichnet, daß die einheitliche Störungsrufnummer durch eine spezielle Kennziffer oder Zifferngruppe nach bestimmten Modalitäten, beispielsweise Tag- oder Nachtabfrage, differenziert ist.

6. Verfahren nach einem der vorhergehenden Ansprüche, dadurch gekennzeichnet, daß der IN-Dienst (8) bei seiner Aktivierung eine automatische Ansage initiiert, die dem die Störungsmeldung absetzenden TK-Teilnehmer (7) eingespielt wird und ihn zur Identifikation der Rufnummer des gestörten Anschlusses (3) auffordert.

7. Verfahren nach Anspruch 6, dadurch gekennzeichnet, daß zusammen mit der automatischen Ansage eine computergestützte Spracherkennungseinrichtung aktiviert wird, die aus den Antworten des meldenden TK-Teilnehmers (7) die Rufnummer des gestörten Anschlusses (3) ermittelt.

8. Verfahren nach Anspruch 6, dadurch gekennzeichnet, daß der TK-Teilnehmer (7) von der Ansage aufgefordert wird, die Rufnummer des gestörten Anschlusses (3) über die Tastatur seines TK-Endgerätes einzugeben.

9. Verfahren nach einem der Ansprüche 6 bis 8, dadurch gekennzeichnet, daß der meldende TK-Teilnehmer (7) durch Spracheingabe oder durch definierte Betätigung der Tastatur seines TK-Endgeräts dem IN-Dienst (8) mitteilen kann, ob sich die Störungsmeldung auf den aktuell zur Absetzung der Störungsmeldung benutzten oder einen anderen TK-Anschluß bezieht.

10. Verfahren nach einem der vorhergehenden Ansprüche, dadurch gekennzeichnet, daß der IN-Dienst (8) aus der festgestellten Anschlußrufnummer des gestörten Anschlusses (3) mittels Datenbankabfrage den für diesen Anschluß (3) zuständigen Netzbetreiber (A) ermittelt.

11. Verfahren nach einem der vorhergehenden Ansprüche, dadurch gekennzeichnet, daß der IN-Dienst (8) den Störungsruf an eine Störungsannahmestelle (5) des zuständigen Netzbetreibers (A) zustellt, die den Störungsruf zur weiteren Bearbeitung entgegennimmt.

12. Verfahren nach Anspruch 11, dadurch gekennzeichnet, daß der IN-Dienst (8) die vom meldenden TK-Teilnehmer (7) angewählte Störungsrufnummer in die Rufnummer der Störungsannahmestelle (5) des zuständigen Netzbetreibers (A) übersetzt, indem er sie nach der Methode der Number Portability (=NP) entsprechend ergänzt.

13. Verfahren nach Anspruch 11, dadurch gekennzeichnet, daß der IN-Dienst (8) die vom meldenden TK-Teilnehmer (7) angewählte Störungsrufnummer in die Rufnummer der Störungsannahmestelle (5) des zuständigen Netzbetreibers (A) übersetzt, indem er sie nach der Methode für die Verbindungsnetzbetreiberauswahl entsprechend ergänzt.

14. Verfahren nach einem der vorhergehenden Ansprüche, dadurch gekennzeichnet, daß der IN-Dienst (8) für die Störungsmeldung eine Identifikationsnummer vergibt, die er einerseits abspeichert, andererseits dem meldenden TK-Teilnehmer (7) mitteilt, damit dieser anschließend den aktuellen Stand der Bearbeitung der Störungsmeldung erfragen kann.
